# EUROPEAN PATENT SPECIFICATION

(11) **EP 3 013 112 B1**
(45) Date of publication and mention of the grant of the patent: **26.06.2019**
(21) Application number: 14822873.7
(22) Date of filing: 07.07.2014
(51) Int. Cl.: H04W 72/04, H04L 12/911, H04W 76/14, H04W 72/02

(54) **USER EQUIPMENT D2D COMMUNICATION RESOURCES ALLOCATION METHOD AND EQUIPMENT**
VERFAHREN UND VORRICHTUNG ZUR ZUWEISUNG VON D2D-KOMMUNIKATIONSRESSOURCEN AN EINE BENUTZERVORRICHTUNG
PROCÉDÉ ET ÉQUIPEMENT D'AFFECTATION DE RESSOURCES DE COMMUNICATION D2D ENTRE DES ÉQUIPEMENTS UTILISATEUR

(30) Priority: 08.07.2013 CN 201310284528
(43) Date of publication of application: 27.04.2016
(73) Proprietor: Huawei Device Co., Ltd., Dongguan, Guangdong 523808 (CN)
(72) Inventor: WANG, Jian, Shenzhen Guangdong 518129 (CN)
(74) Representative: Epping - Hermann - Fischer
(86) International application number: PCT/CN2014/081713
(87) International publication number: WO 2015/003588

(56) References cited:
- WO-A1-2012/159270
- WO-A1-2012/160539
- WO-A2-2013/012225
- CN-A- 102 090 132
- CN-A- 102 905 334
- CN-A- 102 970 758

## Description

### TECHNICAL FIELD

The present invention relates to the field of mobile communications technologies, and in particular, to a resource allocation method and device for direct communication between user devices.

### BACKGROUND

A device to device proximity service (Device to Device Proximity Service, D2D ProSe) has become a research subject of the 3rd Generation Partnership Project (The 3rd Generation Partnership Project, 3GPP) in a Long Term Evolution (Long Term Evolution, LTE) Rel.12 system, and begins to be supported from the Rel.12 system. Direct communication between user devices includes a signal discovery process and a direct communication process. The signal discovery process includes sending of a discovery signal and receiving of the discovery signal. The direct communication process includes a series of processes such as call initiation, channel measurement, channel feedback, resource scheduling, data transmission, and call completion.

In the prior art, in a scenario in which a user device communicates with a base station, the user device measures channel quality and feeds back the channel quality to the base station, and the base station performs resource scheduling for the user device according to the channel quality fed back by the user device. When delivering resource scheduling signaling, the base station may further send a parameter required for data communication on a scheduled physical resource to the user device. In this way, after receiving the scheduling signaling, the user device can perform data communication on the scheduled resource.

However, in a scenario of direct communication between user devices, a base station cannot learn information about a state of a channel between the user devices, and therefore cannot learn a parameter required for direct communication between the user devices. The user devices need to send a channel sounding signal to obtain the channel state information, to determine the parameter required for data communication. Therefore, when a resource for direct communication changes, communication currently performed between the user devices needs to be interrupted, to perform channel sounding to obtain the parameter required for data communication, which affects a direct communication service of the user devices.

WO 2012/159270 A1 provides a mechanism for allocating communication resources of a cellular communication network to a D2D communication. After an eNB has configured a number of resource pools indicating a set of resources usable in the D2D communication, D2D clusters which share a same resource pool are enabled to obtain resources for their respective D2D communication. By detecting the current resource utilization state in the allocated resource pool by measurement on the UE side, it is decided whether suitable resources are available or not. An overload situation is signaled to the eNB if no suitable resource can be detected.

### SUMMARY

Embodiments of the present invention are defined by the claims. A resource allocation method and device for direct communication between user devices are provided, so as to ensure a normal direct communication service of user devices when a resource for direct communication changes.

According to a first aspect, an embodiment of the present invention provides a resource allocation method for direct communication between user devices, including:
determining, by a third device, the third device being a user device, a first resource, where the first resource includes some or all of a second resource, the second resource is determined by the third device before the first resource is determined, and the first resource and the second resource are both used for communication between a first user device and a second user device; and
sending, by the third device, resource signaling to the first user device and/or the second user device, where the resource signaling carries information about the first resource.

According to a second aspect, an embodiment of the present invention provides a resource allocation method for direct communication between user devices, including:
receiving, by a first user device, first resource signaling sent by a third device, where the first resource signaling carries information about a first resource determined by the third device; and
when determining that the first resource does not include some or all of a second resource, determining, by the first user device, that a resource used for communication with a second user device is the first resource and the second resource or is the second resource, where the second resource is determined by the third device before the first resource is determined, and the first resource and the second resource are both used for communication between the first user device and the second user device.

In a first possible implementation manner of the second aspect, when it is determined that a resource used for communication with the second user device is the first resource and the second resource, the method further includes:
starting, by the first user device, a preset timer, where the resource used for communication with the second user device within timing duration of the timer is the first resource and the second resource, and the resource used for communication with the second user device after the timing duration of the timer is the first resource.

With reference to the second aspect and the first possible implementation manner, in a second possible implementation manner, before the receiving, by a first user device, first resource signaling sent by a third device, the method further includes:
receiving, by the first user device, second resource signaling sent by the third device, where the second resource signaling carries information about the second resource.

According to a third aspect, an embodiment of the present invention provides a resource allocation device for user communication, the resource allocation device being a user device including:
a processing module, configured to determine a first resource, where the first resource includes some or all of a second resource, the second resource is determined by the processing module before the first resource is determined, and the first resource and the second resource are both used for communication between a first user device and a second user device; and
a sending module, configured to send resource signaling to the first user device and/or the second user device, where the resource signaling carries information about the first resource.

According to a fourth aspect, an embodiment of the present invention provides a user device, where the user device includes:
a receiving module, configured to receive first resource signaling sent by a third device, where the first resource signaling carries information about a first resource determined by the third device; and
a processing module, configured to: when determining that the first resource does not include some or all of a second resource, determine that a resource used for communication with a second user device is the first resource and the second resource or is the second resource, where the second resource is determined by the third device before the first resource is determined, and the first resource and the second resource are both used for communication between the user device and the second user device.

In a first possible implementation manner of the fourth aspect, the processing module is further configured to: when determining that a resource used for communication with the second user device is the first resource and the second resource, start a preset timer, where the resource used for communication with the second user device within timing duration of the timer is the first resource and the second resource, and the resource used for communication with the second user device after the timing duration of the timer is the first resource.

With reference to the fourth aspect and the first possible implementation manner, in a second possible implementation manner, the receiving module is further configured to: receive second resource signaling sent by the third device, where the second resource signaling carries information about the second resource allocated by the third device for communication between the user device and the second user device.

The embodiments of the present invention provide a resource allocation method and device for direct communication between user devices, which ensure a normal direct communication service of the user devices when a resource for direct communication changes.

### BRIEF DESCRIPTION OF DRAWINGS

To describe the technical solutions in the embodiments of the present invention more clearly,
the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of an embodiment of a resource allocation method for direct communication between user devices provided by the present invention;
FIG. 2 is a flowchart of another embodiment of a resource allocation method for direct communication between user devices provided by the present invention;
FIG. 3 is a flowchart of still another embodiment of a resource allocation method for direct communication between user devices provided by the present invention;
FIG. 4 is a schematic structural diagram of an embodiment of a resource allocation device for direct communication between user devices provided by the present invention;
FIG. 5 is a schematic structural diagram of another embodiment of a resource allocation device for user communication provided by the present invention;
FIG. 6 is a schematic structural diagram of an embodiment of a user device provided by the present invention;
FIG. 7 is a schematic structural diagram of another embodiment of a user device provided by the present invention;
FIG. 8 is a schematic structural diagram of another embodiment of a user device provided by the present invention; and
FIG. 9 is a schematic structural diagram of another embodiment of a user device provided by the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access) system, a Frequency Division Multiple Access (FDMA, Frequency Division Multiple Access) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

A terminal in this application, that is, user equipment, may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

A base station (for example, an access point) involved in this application may refer to a device on the access network that communicates with the wireless terminal on an air interface by using one or more sectors. The base station may be configured to mutually convert a received over-the-air frame and an IP packet and serve as a router between the wireless terminal and a rest portion of the access network, where the rest portion of the access network may include an Internet protocol (IP) network. The base station may also coordinate attribute management of the air interface. For example, the base station may be a base station (BTS, Base Transceiver Station) in GSM or the CDMA, may also be a base station (NodeB) in WCDMA, and may further be an evolved NodeB (NodeB, eNB, or e-NodeB, evolved Node B) in the LTE, which is not limited in the present application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

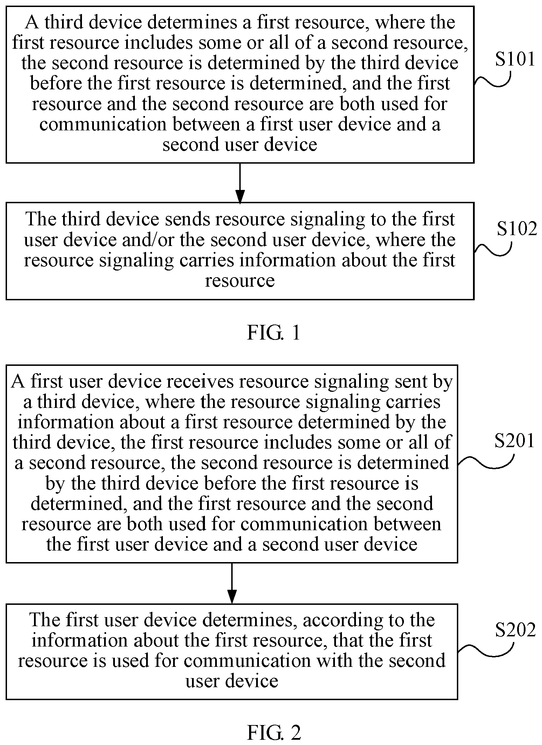

FIG. 1 is a flowchart of an embodiment of a resource allocation method for direct communication between user devices provided by the present invention. As shown in FIG. 1, the method includes:
S101: A third device determines a first resource, where the first resource includes some or all of a second resource, the second resource is determined by the third device before the first resource is determined, and the first resource and the second resource are both used for communication between a first user device and a second user device.
S102: The third device sends resource signaling to the first user device and/or the second user device, where the resource signaling carries information about the first resource.

The foregoing steps are performed by the third device, where the third device may be a base station, may be a user device, or may be a device of another type except the first user device and the second user device.

The method provided in this embodiment is applicable to an implementation scenario of direct communication between the first user device and the second user device. The first resource is a resource currently allocated by the third device for communication between the first user device and the second user device, and the second resource is a resource allocated by the third device for communication between the first user device and the second user device before the first resource is allocated. The information about the first resource may be frequency domain information and/or time domain information and the like of the first resource; and similarly, the information about the second resource may also be frequency domain information and/or time domain information and the like of the second resource.

The first resource may include some or all of the second resource. The following provides description by using an example in which the first resource includes some of the second resource: The second resource that is allocated by the third device for communication between the first user device and the second user device before the first resource is allocated (that is, the second resource allocated last time prior to the first resource that is currently allocated) includes a resource A and a resource B. The first user device and the second user device that participate in direct communication both learn channel state information of the resource A and the resource B, and the first user device and the second user device perform direct communication on the resource A and the resource B; therefore, direct communication can be performed on the resource A and the resource B. When the third device schedules a new resource, the first resource allocated by the third device for communication between the first user device and the second user device includes the resource B and a resource C. The resource B is not only included in the second resource that is allocated by the third device before the first resource is allocated, but also included in the first resource that is currently allocated by the third device. Therefore, for the new resource C, the first user device and the second user device need to perform channel sounding for a period of time to obtain channel state information. However, during this period of time, the first user device and the second user device can continue to perform direct communication by using the resource B, to ensure that communication proceeds normally without interruption.

The third device may send the resource signaling to either or both of the first user device and the second user device. However, it should be noted that, in the implementation scenario in this embodiment, if the first resource currently allocated by the third device does not include any resource in the second resource, after the first user device and/or the second user device receives the resource signaling, it may be considered that the first resource currently allocated by the third device is an erroneous configuration. The direct communication can still be performed between the first user device and the second user device by using the second resource that is allocated by the third device before the first resource is allocated.

This embodiment provides a resource allocation method for direct communication between user devices, where a first resource allocated by a third device for communication between a first user device and a second user device includes some or all of a second resource that is allocated by the third device before the first resource is allocated, so that when a resource for direct communication changes, a normal direct communication service between the user devices is ensured.

FIG. 2 is a flowchart of another embodiment of a resource allocation method for direct communication between user devices provided by the present invention. As shown in FIG. 2, the method includes:
S201: A first user device receives resource signaling sent by a third device, where the resource signaling carries information about a first resource determined by the third device, the first resource includes some or all of a second resource, the second resource is determined by the third device before the first resource is determined, and the first resource and the second resource are both used for communication between the first user device and a second user device.
S202: The first user device determines, according to the information about the first resource, that the first resource is used for communication with the second user device.

It should be noted that, the first user device that performs the foregoing steps in this embodiment may be either user device in two user devices that perform direct communication, that is, the two user devices that perform direct communication both can receive the resource signaling sent by the third device.

For S201 and S202, reference may be made to relevant descriptions in S101 and S102. It should be noted that, if the first resource that is carried in the resource signaling received by the first user device includes some or all of the second resource, where the second resource is allocated by the third device for communication between the first user device and the second user device before the first resource is allocated, the first user device may use the first resource according to the information about the first resource. Specifically, the following is included: During a period of time in which the first user device and the second user device perform channel sounding to obtain channel state information of a new resource (which refers to another resource in the first resource except the included second resource), direct communication is performed by using the second resource included in the first resource, to ensure that the communication proceeds normally without interruption. After the channel state information of the new resource is obtained through channel sounding, direct communication is performed by using the first resource.

This embodiment provides a resource allocation method for direct communication between user devices, where a first resource that is received by the first user device and allocated by a third device for communication between a first user device and a second user device includes some or all of a second resource that is allocated by the third device before the first resource is allocated, so that when a resource for direct communication changes, a normal direct communication service between the user devices is ensured.

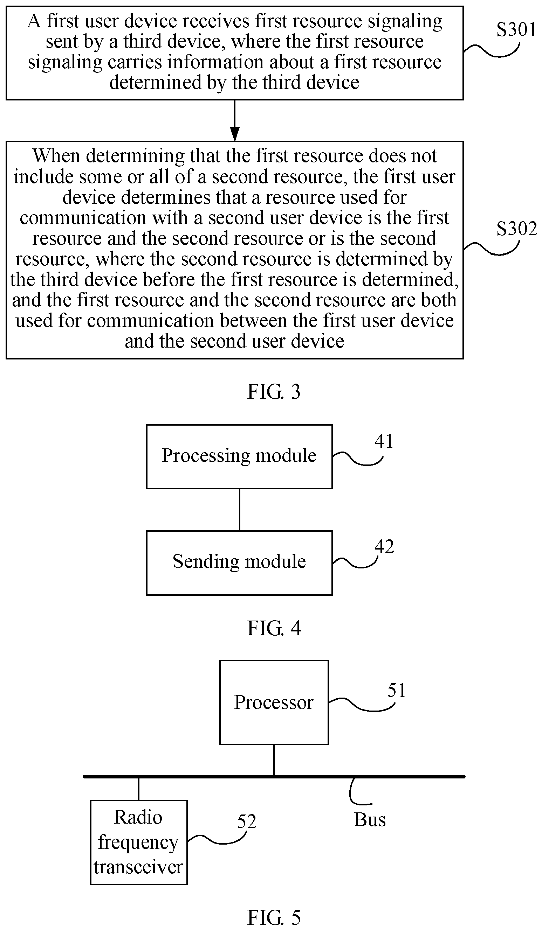

FIG. 3 is a flowchart of still another embodiment of a resource allocation method for direct communication between user devices provided by the present invention. As shown in FIG. 3, the method includes:
S301: A first user device receives first resource signaling sent by a third device, where the first resource signaling carries information about a first resource determined by the third device.
S302: When determining that the first resource does not include some or all of a second resource, the first user device determines that a resource used for communication with a second user device is the first resource and the second resource or is the second resource, where the second resource is determined by the third device before the first resource is determined, and the first resource and the second resource are both used for communication between the first user device and the second user device.

It should be noted that, the first user device that performs the foregoing steps in this embodiment may be either user device in two user devices that perform direct communication, that is, the two user devices that perform direct communication both can receive the resource signaling sent by the third device.

Similar to the first resource signaling, before receiving the first resource signaling, the first user device receives second resource signaling sent by the third device, where the second resource signaling carries information about the second resource allocated by the third device for communication between the first user device and the second user device.

When the third device schedules a new resource for the first user device, the first user device receives the first resource signaling sent by the third device, where the first resource signaling carries the information about the first resource allocated by the third device for communication between the first user device and the second user device.

If the first resource currently allocated by the third device does not include some or all of the second resource allocated by the third device for communication between the first user device and the second user device before the first resource is allocated, for example, the second resources previously allocated by the third device are a resource A and a resource B, and the currently allocated first resources are a resource C and a resource D. In this implementation scenario, as a feasible implementation manner, the third device and the user device that receives the first resource signaling in direct communication determine that a resource used for communication with the second user device is the first resource and the second resource or is the second resource.

Optionally, when determining that the to-be-used resources are the first resource and the second resource, the first user device may further start a preset timer (timer), where resources used for communication between the first user device and the second user device within timing duration are the first resource and the second resource, and the second resource is not used after the timing duration elapses. That is, the resource allocated before the first resource is allocated is valid only within a period of time. For example, the resource A and the resource B that are scheduled before the first resource is allocated are valid only within a period of time, and after the timing duration of the timer elapses, only the resource C and the resource D are used for direct communication between the first user device and the second user device. It should be noted that, the timing duration of the timer generally needs to be greater than a time length used by the first user device and the second user device to obtain, through channel sounding, channel state information of a new resource (the resource C and the resource D). After the timing duration of the timer elapses, the resource used for communication with the second user device is the first resource.

If the first resource currently allocated by the third device does not include some or all of the second resource allocated by the third device for communication between the first user device and the second user device before the first resource is allocated, in another feasible implementation manner, the first user device determines that a resource used in direct communication with the second user device is the second resource. In this implementation scenario, the third device and the user device that receives the first resource signaling in direct communication determine that direct communication is performed by still using the second resource that is allocated by the third device before the first resource is allocated.

This embodiment provides a resource allocation method for direct communication between user devices. If a first resource currently allocated by a third device does not include some or all of a second resource that is allocated by the third device before the first resource is allocated, it is determined that a resource used for communication with a second user device is the first resource and the second resource or is the second resource, so that when a resource for direct communication changes, a normal direct communication service between the user devices is ensured.

FIG. 4 is a schematic structural diagram of an embodiment of a resource allocation device for direct communication between user devices provided by the present invention. As shown in FIG. 4, the device may be a base station, or may be a user device, and specifically includes:
a processing module 41, configured to determine a first resource, where the first resource includes some or all of a second resource, the second resource is determined by the processing module before the first resource is determined, and the first resource and the second resource are both used for communication between a first user device and a second user device; and
a sending module 42, configured to send resource signaling to the first user device and/or the second user device, where the resource signaling carries information about the first resource.

This embodiment of the present invention provides a resource allocation device for direct communication between user devices. A first resource allocated for communication between a first user device and a second user device includes some or all of a second resource that is allocated by the third device before the first resource is allocated, so that when a resource for direct communication changes, a normal direct communication service between the user devices is ensured.

FIG. 5 is a schematic structural diagram of another embodiment of a resource allocation device for direct communication between user devices provided by the present invention. As shown in FIG. 5, the device may be a base station, or may be a user device, and specifically includes: a processor 51 and a radio frequency transceiver 52, where the processor 51 and the radio frequency transceiver 52 are coupled by using a bus, where:
the processor 51 is configured to: determine a first resource, where the first resource includes some or all of a second resource, the second resource is determined by the processor 51 before the first resource is determined, and the first resource and the second resource are both used for communication between a first user device and a second user device; and
the radio frequency transceiver 52 is configured to: send resource signaling to the first user device and/or the second user device, where the resource signaling carries information about the first resource.

This embodiment of the present invention provides a resource allocation device for direct communication between user devices, where a first resource allocated for communication between a first user device and a second user device includes some or all of a second resource that is allocated by the third device before the first resource is allocated, so that when a resource for direct communication changes, a normal direct communication service between the user devices is ensured.

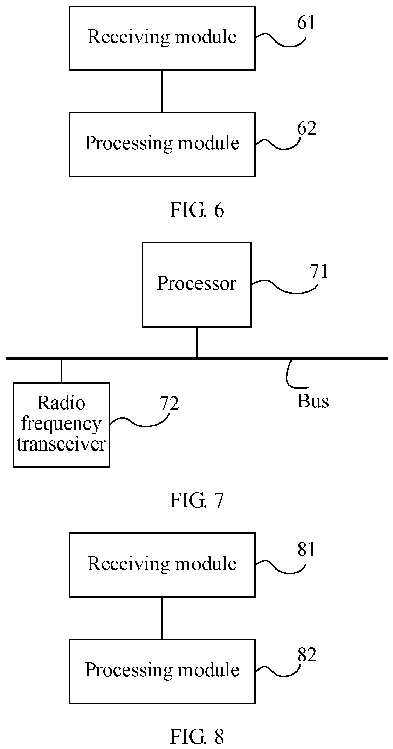

FIG. 6 is a schematic structural diagram of an embodiment of a user device provided by the present invention. As shown in FIG. 6, the user device is a first user device, and specifically includes:
a receiving module 61, configured to receive resource signaling sent by a third device, where the resource signaling carries information about a first resource determined by the third device, the first resource includes some or all of a second resource, the second resource is determined by the third device before the first resource is determined, and the first resource and the second resource are both used for communication between the first user device and a second user device; and
a processing module 62, configured to determine, according to the information about the first resource, that the first resource is used for communication with the second user device.

This embodiment of the present invention provides a user device, where a first resource that is received from a third device and allocated for communication between a first user device and a second user device includes some or all of a second resource that is allocated by the third device before the first resource is allocated, so that when a resource for direct communication changes, a normal direct communication service between the user devices is ensured.

FIG. 7 is a schematic structural diagram of another embodiment of a user device provided by the present invention. As shown in FIG. 7, the user device is a first user device, and specifically includes: a processor 71 and a radio frequency transceiver 72, where the processor 71 and the radio frequency transceiver 72 are coupled by using a bus, where:
the radio frequency transceiver 72 is configured to receive resource signaling sent by a third device, where the resource signaling carries information about a first resource determined by the third device, the first resource includes some or all of a second resource, the second resource is determined by the third device before the first resource is determined, and the first resource and the second resource are both used for communication between the first user device and a second user device; and
the processor 71 is configured to determine, according to the information about the first resource, that the first resource is used for communication with the second user device.

This embodiment of the present invention provides a user device, where a first resource that is received from a third device and allocated for communication between the first user device and a second user device includes some or all of a second resource that is allocated by the third device before the first resource is allocated, so that when a resource for direct communication changes, a normal direct communication service between the user devices is ensured.

FIG. 8 is a schematic structural diagram of another embodiment of a user device provided by the present invention. The user device is a first user device, and specifically includes:
a receiving module 81, configured to receive first resource signaling sent by a third device, where the first resource signaling carries information about a first resource determined by the third device; and
a processing module 82, configured to: when determining that the first resource does not include some or all of a second resource, determine that a resource used for communication with a second user device is the first resource and the second resource or is the second resource, where the second resource is determined by the third device before the first resource is determined, and the first resource and the second resource are both used for communication between the first user device and the second user device.

The processing module 82 may be further configured to: when determining that a resource used for communication with the second user device is the first resource and the second resource, start a preset timer, where the resource used for communication with the second user device within timing duration of the timer is the first resource and the second resource, and the resource used for communication with the second user device after the timing duration of the timer is the first resource.

Optionally, the receiving module 81 may be further configured to: receive second resource signaling sent by the third device, where the second resource signaling carries information about the second resource allocated by the third device for communication between the first user device and the second user device.

According to the user device provided in this embodiment, if a first resource allocated by a third device does not include some or all of a second resource that is allocated by the third device before the first resource is allocated, the user device determines that a resource used for communication with a second user device is the first resource and the second resource or is the second resource, so that when a resource for direct communication changes, a normal direct communication services between the user devices is ensured.

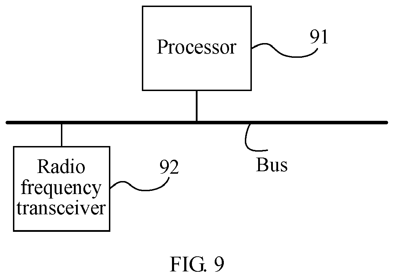

FIG. 9 is a schematic structural diagram of another embodiment of a user device provided by the present invention. The user device is a first user device, and specifically includes: a processor 91 and a radio frequency transceiver 92, where the processor 91 and the radio frequency transceiver 92 are coupled by using a bus, where:
the radio frequency transceiver 92 is configured to receive first resource signaling sent by a third device, where the first resource signaling carries information about a first resource determined by the third device; and
the processor 91 is configured to: when determining that the first resource does not include some or all of a second resource, determine that a resource used for communication with a second user device is the first resource and the second resource or is the second resource, where the second resource is determined by the third device before the first resource is determined, and the first resource and the second resource are both used for communication between the first user device and the second user device.

Optionally, the processor 91 may be further configured to: when determining that a resource used for communication with the second user device is the first resource and the second resource, start a preset timer, where the resource used for communication with the second user device within timing duration of the timer is the first resource and the second resource, and the resource used for communication with the second user device after the timing duration of the timer is the first resource.

Optionally, the radio frequency transceiver 92 may be further configured to: receive second resource signaling sent by the third device, where the second resource signaling carries information about the second resource allocated by the third device for communication between the first user device and the second user device.

According to the user device provided in this embodiment, if a first resource allocated by a third device does not include some or all of a second resource that is allocated by the third device before the first resource is allocated, the user device determines that a resource used for communication with a second user device is the first resource and the second resource or is the second resource, so that when a resource for direct communication changes, a normal direct communication services between the user devices is ensured.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor to perform all or some of the steps of the methods in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present application.

## Claims

1. A resource allocation method for direct communication between user devices, comprising:
determining (S101), by a third device, the third device being a user device, a first resource, wherein the first resource comprises some or all of a second resource, the second resource is determined by the third device before the first resource is determined, and the first resource and the second resource are both used for communication between a first user device and a second user device, wherein the first resource is a resource currently allocated by the third device for communication between the first user device and the second user device, and the second resource is a resource allocated by the third device for communication between the first user device and the second user device before the first resource is allocated; and
sending (S102), by the third device, resource signaling to the first user device and/or the second user device, wherein the resource signaling carries information about the first resource, wherein the information about the first resource is frequency domain information and/or time domain information, wherein during a period of time in which the first user device and the second user device perform channel sounding to obtain channel state information of a new resource, which refers to another resource in the first resource except the included second resource, direct communication is performed by using the second resource included in the first resource.

2. A resource allocation method for direct communication between user devices, comprising:
receiving (S301), by a first user device, first resource signaling sent by a third device, the third device being a user device, wherein the first resource signaling carries information about a first resource determined by the third device, wherein the first resource is a resource currently allocated by the third device for communication between the first user device and a second user device; and
when determining that the first resource does not comprise some or all of a second resource, wherein the second resource is a resource allocated by the third device for communication between the first user device and the second user device before the first resource is allocated determining (S302), by the first user device, that a resource used for communication with the second user device is the first resource and the second resource or is the second resource, wherein the second resource is determined by the third device before the first resource is determined, and the first resource and the second resource are both used for communication between the first user device and the second user device,
wherein when it is determined that a resource used for communication with the second user device is the first resource and the second resource, the method further comprises:
starting, by the first user device, a preset timer, wherein the resource used for communication with the second user device within timing duration of the timer is the first resource and the second resource, and the resource used for communication with the second user device after the timing duration of the timer is the first resource.

3. The method according to claim 2, wherein before the receiving, by a first user device, first resource signaling sent by a third device, the method further comprises:
receiving, by the first user device, second resource signaling sent by the third device, wherein the second resource signaling carries information about the second resource.

4. A resource allocation device for direct communication between user devices, the resource allocation device being a user device comprising:
a processing module (41), configured to determine a first resource, wherein the first resource comprises some or all of a second resource, the second resource is determined by the processing module (41) before the first resource is determined, and the first resource and the second resource are both used for communication between a first user device and a second user device, wherein the first resource is a resource currently allocated by the resource allocation device for communication between the first user device and the second user device, and the second resource is a resource allocated by the resource allocation device for communication between the first user device and the second user device before the first resource is allocated; and
a sending module (42), configured to send resource signaling to the first user device and/or the second user device, wherein the resource signaling carries information about the first resource, wherein the information about the first resource is frequency domain information and/or time domain information, wherein during a period of time in which the first user device and the second user device perform channel sounding to obtain channel state information of a new resource, which refers to another resource in the first resource except the included second resource, direct communication is performed by using the second resource included in the first resource.

5. A user device, wherein the user device comprises:
a receiving module (81), configured to receive first resource signaling sent by a third device, the third device being a user device, wherein the first resource signaling carries information about a first resource determined by the third device wherein the first resource is a resource currently allocated by the third device for communication between the user device and a second user device and the information about the first resource is frequency domain information and/or time domain information; and
a processing module (82), configured to: when determining that the first resource does not comprise some or all of a second resource, wherein the second resource is a resource allocated by the third device for communication between the user device and the second user device before the first resource is allocated, determine that a resource used for communication with a second user device is the first resource and the second resource or is the second resource, wherein the second resource is determined by the third device before the first resource is determined, and the first resource and the second resource are both used for communication between the user device and the second user device,
wherein the processing module is further configured to: when determining that a resource used for communication with the second user device is the first resource and the second resource, start a preset timer, wherein the resource used for communication with the second user device within timing duration of the timer is the first resource and the second resource, and the resource used for communication with the second user device after the timing duration of the timer is the first resource.

6. The user device according to claim 5, wherein the receiving module is further configured to: receive second resource signaling sent by the third device, wherein the second resource signaling carries information about the second resource allocated by the third device for communication between the user device and the second user device.

## Patentansprüche

1. Betriebsmittelzuordnungsverfahren zur direkten Kommunikation zwischen Anwendereinrichtungen, das Folgendes umfasst:
Bestimmen (S101) durch eine dritte Einrichtung, wobei die dritte Einrichtung eine Anwendereinrichtung ist, eines ersten Betriebsmittels, wobei das erste Betriebsmittel ein zweites Betriebsmittel teilweise oder vollständig umfasst, das zweite Betriebsmittel durch die dritte Einrichtung bestimmt wird, bevor das erste Betriebsmittel bestimmt wird, das erste Betriebsmittel und das zweite Betriebsmittel beide zur Kommunikation zwischen einer ersten Anwendereinrichtung und einer zweiten Anwendereinrichtung verwendet werden, das erste Betriebsmittel ein Betriebsmittel ist, das gegenwärtig durch die dritte Einrichtung der Kommunikation zwischen der ersten Anwendereinrichtung und der zweiten Anwendereinrichtung zugeordnet ist, und das zweite Betriebsmittel ein Betriebsmittel ist, das durch die dritte Einrichtung der Kommunikation zwischen der ersten Anwendereinrichtung und der zweiten Anwendereinrichtung zugeordnet wird, bevor das erste Betriebsmittel zugeordnet wird; und
Senden (S102) durch die dritte Einrichtung einer Betriebsmittelsignalisierung zur ersten Anwendereinrichtung und/oder zur zweiten Anwendereinrichtung, wobei die Betriebsmittelsignalisierung Informationen über das erste Betriebsmittel führt und die Informationen über das erste Betriebsmittel Frequenzdomäneninformationen und/oder Zeitdomäneninformationen sind, wobei
während eines Zeitraums, in dem die erste Anwendereinrichtung und die zweite Anwendereinrichtung eine Kanalsondierung durchführen, um Kanalzustandsinformationen eines neuen Betriebsmittels zu erhalten, die auf ein weiteres Betriebsmittel im ersten Betriebsmittel außer dem enthaltenen zweiten Betriebsmittel Bezug nehmen, eine direkte Kommunikation unter Verwendung des zweiten Betriebsmittels, das im ersten Betriebsmittel enthalten ist, durchgeführt wird.

2. Betriebsmittelzuordnungsverfahren zur direkten Kommunikation zwischen Anwendereinrichtungen, das Folgendes umfasst:
Empfangen (S301) durch eine erste Anwendereinrichtung einer ersten Betriebsmittelsignalisierung, die durch eine dritte Einrichtung gesendet wurde, wobei die dritte Einrichtung eine Anwendereinrichtung ist, die erste Betriebsmittelsignalisierung Informationen über ein erstes Betriebsmittel führt, die durch die dritte Einrichtung bestimmt wurden, und das erste Betriebsmittel ein Betriebsmittel ist, das gegenwärtig durch die dritte Einrichtung zur Kommunikation zwischen der ersten Anwendereinrichtung und einer zweiten Anwendereinrichtung zugeordnet ist; und
dann, wenn bestimmt wird, dass das erste Betriebsmittel nicht das zweite Betriebsmittel teilweise oder vollständig umfasst, wobei das zweite Betriebsmittel ein Betriebsmittel ist, das durch die dritte Einrichtung zur Kommunikation zwischen der ersten Anwendereinrichtung und der zweiten Anwendereinrichtung zugeordnet wird,
bevor das erste Betriebsmittel zugeordnet wird, Bestimmen (S302) durch die erste Anwendereinrichtung, dass ein Betriebsmittel, das zur Kommunikation mit der zweiten Anwendereinrichtung verwendet wird, das erste Betriebsmittel und das zweite Betriebsmittel ist oder das zweite Betriebsmittel ist, wobei das zweite Betriebsmittel durch die dritte Einrichtung bestimmt wird, bevor das erste Betriebsmittel bestimmt wird, und das erste Betriebsmittel und das zweite Betriebsmittel beide zur Kommunikation zwischen der ersten Anwendereinrichtung und der zweiten Anwendereinrichtung verwendet werden, wobei
dann, wenn bestimmt wird, dass ein Betriebsmittel, das zur Kommunikation mit der zweiten Anwendereinrichtung verwendet wird, das erste Betriebsmittel und das zweite Betriebsmittel ist, das Verfahren ferner Folgendes umfasst:
Starten durch die ersten Anwendereinrichtung eines voreingestellten Zeitgebers, wobei das Betriebsmittel, das zur Kommunikation mit der zweiten Anwendereinrichtung in der Ablaufdauer des Zeitgebers verwendet wird, das erste Betriebsmittel und das zweite Betriebsmittel ist und das Betriebsmittel, das zur Kommunikation mit der zweiten Anwendereinrichtung nach der Ablaufdauer des Zeitgebers verwendet wird, das erste Betriebsmittel ist.

3. Verfahren nach Anspruch 2, wobei vor dem Empfangen durch eine erste Anwendereinrichtung einer ersten Betriebsmittelsignalisierung, die durch eine dritte Einrichtung gesendet wurde, das Verfahren ferner Folgendes umfasst:
Empfangen durch die erste Anwendereinrichtung einer zweiten Betriebsmittelsignalisierung, die durch die dritte Einrichtung gesendet wurde, wobei die zweite Betriebsmittelsignalisierung Informationen über das zweite Betriebsmittel führt.

4. Betriebsmittelzuordnungseinrichtung zur direkten Kommunikation zwischen Anwendereinrichtungen, wobei die Betriebsmittelzuordnungseinrichtung eine Anwendereinrichtung ist, die Folgendes umfasst:
ein Verarbeitungsmodul (41), das konfiguriert ist, ein erstes Betriebsmittel zu bestimmen, wobei das erste Betriebsmittel ein zweites Betriebsmittel teilweise oder vollständig umfasst, das zweite Betriebsmittel durch das Verarbeitungsmodul (41) bestimmt wird, bevor das erste Betriebsmittel bestimmt wird, das erste Betriebsmittel und das zweite Betriebsmittel beide zur Kommunikation zwischen einer ersten Anwendereinrichtung und einer zweiten Anwendereinrichtung verwendet werden, das erste Betriebsmittel ein Betriebsmittel ist, das gegenwärtig durch die Betriebsmittelzuordnungseinrichtung zur Kommunikation zwischen der ersten Anwendereinrichtung und der zweiten Anwendereinrichtung zugeordnet ist, und das zweite Betriebsmittel ein Betriebsmittel ist, das durch die Betriebsmittelzuordnungseinrichtung zur Kommunikation zwischen der ersten Anwendereinrichtung und der zweiten Anwendereinrichtung zugeordnet wird, bevor das erste Betriebsmittel zugeordnet wird; und
ein Sendemodul (42), das konfiguriert ist, eine Betriebsmittelsignalisierung zur ersten Anwendereinrichtung und/oder zur zweiten Anwendereinrichtung zu senden, wobei die Betriebsmittelsignalisierung Informationen über das erste Betriebsmittel führt und die Informationen über das erste Betriebsmittel Frequenzdomäneninformationen und/oder Zeitdomäneninformationen sind, wobei
während eines Zeitraums, in dem die erste Anwendereinrichtung und die zweite Anwendereinrichtung eine Kanalsondierung durchführen, um Kanalzustandsinformationen eines neuen Betriebsmittels zu erhalten, die auf ein weiteres Betriebsmittel im ersten Betriebsmittel außer dem enthaltenen zweiten Betriebsmittel Bezug nehmen, eine direkte Kommunikation unter Verwendung des zweiten Betriebsmittels, das im ersten Betriebsmittel enthalten ist, durchgeführt wird.

5. Anwendereinrichtung, wobei die Anwendereinrichtung Folgendes umfasst:
ein Empfangsmodul (81), das konfiguriert ist, eine erste Betriebsmittelsignalisierung, die durch eine dritte Einrichtung gesendet wurde, zu empfangen, wobei die dritte Einrichtung eine Anwendereinrichtung ist, die erste Betriebsmittelsignalisierung Informationen über ein erstes Betriebsmittel führt, die durch die dritte Einrichtung bestimmt wurden, und das erste Betriebsmittel ein Betriebsmittel ist, das gegenwärtig durch die dritte Einrichtung zur Kommunikation zwischen der ersten Anwendereinrichtung und einer zweiten Anwendereinrichtung zugeordnet ist, und die Informationen über das erste Betriebsmittel Frequenzdomäneninformationen und/oder Zeitdomäneninformationen sind; und
ein Verarbeitungsmodul (82), das konfiguriert ist, dann, wenn bestimmt wird, dass das erste Betriebsmittel nicht das zweite Betriebsmittel teilweise oder vollständig umfasst, wobei das zweite Betriebsmittel ein Betriebsmittel ist, das durch die dritte Einrichtung zur Kommunikation zwischen der Anwendereinrichtung und der zweiten Anwendereinrichtung zugeordnet wird, bevor das erste Betriebsmittel zugeordnet wird, zu bestimmen, dass ein Betriebsmittel, das zur Kommunikation mit einer zweiten Anwendereinrichtung verwendet wird, das erste Betriebsmittel und das zweite Betriebsmittel ist oder das zweite Betriebsmittel ist, wobei das zweite Betriebsmittel durch die dritte Einrichtung bestimmt wird, bevor das erste Betriebsmittel bestimmt wird, und das erste Betriebsmittel und das zweite Betriebsmittel beide zur Kommunikation zwischen der Anwendereinrichtung und der zweiten Anwendereinrichtung verwendet werden, wobei
das Verarbeitungsmodul ferner konfiguriert ist, dann, wenn bestimmt wird, dass ein Betriebsmittel, das zur Kommunikation mit der zweiten Anwendereinrichtung verwendet wird, das erste Betriebsmittel und das zweite Betriebsmittel ist, einen voreingestellten Zeitgeber zu starten, wobei das Betriebsmittel, das zur Kommunikation mit der zweiten Anwendereinrichtung in der Ablaufdauer des Zeitgebers verwendet wird, das erste Betriebsmittel und das zweite Betriebsmittel ist und das Betriebsmittel, das zur Kommunikation mit der zweiten Anwendereinrichtung nach der Ablaufdauer des Zeitgebers verwendet wird, das erste Betriebsmittel ist.

6. Anwendereinrichtung nach Anspruch 5, wobei
das Empfangsmodul ferner konfiguriert ist, eine zweite Betriebsmittelsignalisierung, die durch die dritte Einrichtung gesendet wurde, zu empfangen, wobei die zweite Betriebsmittelsignalisierung Informationen über das zweite Betriebsmittel, das durch die dritte Einrichtung zur Kommunikation zwischen der Anwendereinrichtung und der zweiten Anwendereinrichtung zugeordnet wurde, führt.

## Revendications

1. Procédé d'allocation de ressources pour une communication directe entre des dispositifs utilisateurs, comprenant les étapes consistant à :
déterminer (S101), par un troisième dispositif, le troisième dispositif étant un dispositif utilisateur, une première ressource, dans lequel la première ressource comprend tout ou partie d'une seconde ressource, la seconde ressource étant déterminée par le troisième dispositif avant que la première ressource ne soit déterminée, et la première ressource et la seconde ressource étant toutes deux utilisées pour la communication entre un premier dispositif utilisateur et un deuxième dispositif utilisateur, dans lequel la première ressource est une ressource actuellement allouée par le troisième dispositif pour une communication entre le premier dispositif utilisateur et le deuxième dispositif utilisateur, et la seconde ressource est une ressource allouée par le troisième dispositif pour une communication entre le premier dispositif utilisateur et le deuxième dispositif utilisateur avant l'allocation de la première ressource ; et
envoyer (S 102), par le troisième dispositif, une signalisation de ressources au premier dispositif utilisateur et/ou au deuxième dispositif utilisateur, dans lequel la signalisation de ressources apporte des informations sur la première ressource, dans lequel les informations concernant la première ressource sont des informations de domaine fréquentiel et/ou des informations de domaine temporel, dans lequel pendant une période de temps au cours de laquelle le premier dispositif utilisateur et le deuxième dispositif utilisateur effectuent une recherche de canal pour obtenir des informations d'état de canal d'une nouvelle ressource, qui fait référence à une autre ressource incluse dans la première ressource, à l'exception de la seconde ressource, une communication directe est effectuée en utilisant la seconde ressource incluse dans la première ressource.

2. Procédé d'allocation de ressources pour une communication directe entre des dispositifs utilisateurs, comprenant les étapes consistant à :
recevoir (S301), par un premier dispositif utilisateur, la première signalisation de ressources envoyée par un troisième dispositif, le troisième dispositif étant un dispositif utilisateur, dans lequel la signalisation de la première ressource apporte des informations sur une première ressource déterminée par le troisième dispositif, dans lequel la première ressource est une ressource actuellement allouée par le troisième dispositif pour une communication entre le premier dispositif utilisateur et un deuxième dispositif utilisateur ; et
lorsque l'on détermine que la première ressource ne comprend pas tout ou partie d'une seconde ressource, dans lequel la seconde ressource est une ressource allouée par le troisième dispositif pour une communication entre le premier dispositif utilisateur et le deuxième dispositif utilisateur avant l'allocation de la première ressource,
déterminer (S302), par le premier dispositif utilisateur, qu'une ressource utilisée pour la communication avec le deuxième dispositif utilisateur est constituée par la première ressource et la seconde ressource ou est la seconde ressource, dans lequel la seconde ressource est déterminée par le troisième dispositif avant la détermination de la première ressource, et la première ressource et la seconde ressource sont toutes deux utilisées pour la communication entre le premier dispositif utilisateur et le deuxième dispositif utilisateur,
dans lequel, lorsqu'il est déterminé qu'une ressource utilisée pour la communication avec le deuxième dispositif utilisateur est constituée par la première ressource et la seconde ressource, le procédé comprend en outre l'étape consistant à :
lancer, par le premier appareil utilisateur, une temporisation préréglée, dans lequel la ressource utilisée pour la communication avec le deuxième dispositif utilisateur pendant la durée de la temporisation est constituée par la première ressource et la seconde ressource, et la ressource utilisée pour la communication avec le deuxième dispositif utilisateur après la durée de la temporisation est la première ressource.

3. Procédé selon la revendication 2, dans lequel, avant la réception, par un premier dispositif utilisateur, d'une première signalisation de ressources envoyée par un troisième dispositif, le procédé comprend en outre l'étape consistant à :
recevoir, par le premier dispositif utilisateur, une seconde signalisation de ressources envoyée par le troisième dispositif, dans lequel la seconde signalisation de ressources apporte des informations sur la seconde ressource.

4. Dispositif d'allocation de ressources pour une communication directe entre des dispositifs utilisateur, le dispositif d'allocation de ressources étant un dispositif utilisateur comprenant :
un module de traitement (41) configuré pour déterminer une première ressource, dans lequel la première ressource comprend tout ou partie d'une seconde ressource, la seconde ressource étant déterminée par le module de traitement (41) avant que la première ressource ne soit déterminée, et la première ressource et la seconde ressource étant toutes deux utilisées pour la communication entre un premier dispositif utilisateur et un deuxième dispositif utilisateur, dans lequel la première ressource est une ressource actuellement allouée par le dispositif d'allocation de ressources à une communication entre le premier dispositif utilisateur et le deuxième dispositif utilisateur, et la seconde ressource est une ressource allouée par le dispositif d'allocation de ressources à une communication entre le premier dispositif utilisateur et le deuxième dispositif utilisateur avant l'allocation de la première ressource ; et
un module d'envoi (42), configuré pour une signalisation de ressources au premier dispositif utilisateur et/ou au deuxième dispositif utilisateur, dans lequel la signalisation de ressources apporte des informations sur la première ressource, dans lequel les informations concernant la première ressource sont des informations de domaine fréquentiel et/ou des informations de domaine temporel, dans lequel pendant une période de temps au cours de laquelle le premier dispositif utilisateur et le deuxième dispositif utilisateur effectuent une recherche de canal pour obtenir des informations d'état de canal d'une nouvelle ressource, qui fait référence à une autre ressource incluse dans la première ressource, à l'exception de la seconde ressource, une communication directe est effectuée en utilisant la seconde ressource incluse dans la première ressource.

5. Dispositif utilisateur, dans lequel le dispositif utilisateur comprend :
un module de réception (81), configuré pour recevoir une première signalisation de ressources envoyée par un troisième dispositif, le troisième dispositif étant un dispositif utilisateur, dans lequel la première signalisation de ressources apporte des informations sur une première ressource déterminée par le troisième dispositif, dans lequel la première ressource est une ressource actuellement allouée par le troisième dispositif pour une communication entre le dispositif utilisateur et un deuxième dispositif utilisateur et les informations concernant la première ressource sont des informations de domaine fréquentiel et/ou des informations de domaine temporel ; et
un module de traitement (82), configuré pour : lorsque l'on détermine que la première ressource ne comprend pas tout ou partie d'une seconde ressource, dans lequel la seconde ressource est une ressource allouée par le troisième dispositif pour une communication entre le dispositif utilisateur et le deuxième dispositif utilisateur avant l'allocation de la première ressource, déterminer qu'une ressource utilisée pour la communication avec un deuxième dispositif utilisateur est constituée par la première ressource et la seconde ressource ou est la seconde ressource, dans lequel la seconde ressource est déterminée par le troisième dispositif avant la détermination de la première ressource, et la première ressource et la seconde ressource sont toutes deux utilisées pour la communication entre le dispositif utilisateur et le deuxième dispositif utilisateur,
dans lequel le module de traitement est en outre configuré pour : lors de la détermination du fait qu'une ressource utilisée pour la communication avec le deuxième dispositif utilisateur est constituée par la première ressource et la seconde ressource, lancer une temporisation préréglée, dans lequel la ressource utilisée pour la communication avec le deuxième dispositif utilisateur pendant la durée de la temporisation est constituée par la première ressource et la seconde ressource, et la ressource utilisée pour la communication avec le deuxième dispositif utilisateur après la durée de la temporisation est la première ressource.

6. Dispositif utilisateur selon la revendication 5, dans lequel le module de réception est en outre configuré pour : recevoir la signalisation de la seconde ressource envoyée par le troisième dispositif, dans lequel la signalisation de la seconde ressource apporte des informations sur la seconde ressource allouée par le troisième dispositif pour la communication entre le dispositif utilisateur et le deuxième dispositif utilisateur.
